# EUROPÄISCHE PATENTSCHRIFT

(11) **EP 1 891 302 B1**
(45) Veröffentlichungstag und Bekanntmachung des Hinweises auf die Patenterteilung: **23.10.2013**
(21) Anmeldenummer: 06743038.9
(22) Anmeldetag: 23.05.2006
(51) Int. Cl.: F01D 25/08, F01D 25/12, F02B 37/22, F01D 17/14, F02C 6/12, F16F 1/32

(54) **SCHEIBENANORDNUNG FÜR EINEN TURBOLADER**
PANE ARRANGEMENT FOR A TURBOCHARGER
SYSTEME DE PLAQUES POUR TURBOCOMPRESSEUR

(30) Priorität: 16.06.2005 DE 202005009491 U
(43) Veröffentlichungstag der Anmeldung: 27.02.2008
(73) Patentinhaber: BorgWarner, Inc., Auburn Hills, MI 48326-2872 (US)
(72) Erfinder: WALTER, Stefan, 67308 Rüssingen (DE); STIEGLER, Volker, 67294 Gauersheim (DE)
(74) Vertreter: Schmitz, Hans-Werner
(86) Internationale Anmeldenummer: PCT/EP2006/004905
(87) Internationale Veröffentlichungsnummer: WO 2006/133793

(56) Entgegenhaltungen:
- EP-A- 0 646 699
- EP-A- 1 672 177
- WO-A-2004/048755
- DE-A1- 10 011 441
- US-A- 4 198 192
- US-A- 5 087 176
- US-A- 5 207 559
- US-A1- 2006 010 880

## Beschreibung

Die Erfindung betrifft einen Turbolader gemäß dem Oberbegriff des Anspruches 1.

Ein derartiger Turbolader ist aus der EP 1 398 463 A1 bekannt. Bei diesem Turbolader ist um dessen Welle herum auf der Turbinenseite ein Hitzeschild vorgesehen, der dazu dient, das Lagergehäuse vor Beschädigungen durch überhöhte Temperaturen aufgrund der durch die Turbine strömenden Abgase des Verbrennungsmotors zu schützen. Der bekannte Hitzeschild besteht aus einem einlagigen Bauteil, dessen Wärmedämmeigenschaften jedoch verbesserungsbedürftig sind.

In der EP 0 160 460 B1 ist eine weitere Anordnung dargestellt, wobei hier eine Scheibenfeder zum Einsatz kommt, die eine axiale Vorspannkraft auf den axial zu fixierenden Schaufellagerring ausübt. Die Funktion der Wärmedämmung ist aufgrund der Turbinenradferne an dieser Stelle nicht gefordert.

Des Weiteren wird in der EP 1 672 177 A1 ein Turbolader mit einer Scheibenfeder beschrieben, die aus zumindest zwei, gegebenenfalls jedoch mehreren Materiallagen ausgebildet ist und sowohl die Funktion der Vorspannkrafterzeugung als auch die Verbesserung der Abschirmfunktion durch Erhöhung des Wärmewiderstandes beinhaltet.

In der US 5,087,176 wird ein Turbolader mit einer Scheibenanordnung beschrieben, die von einem Hitzeschild und einem Abstandshalter gebildet wird. Der Hitzeschild ist in dieser Anordnung fest zwischen einem Turbinengehäuse und einem Lagergehäuse eingespannt.

Es ist daher Aufgabe der vorliegenden Erfindung, einen Turbolader der im Oberbegriff des Anspruches 1 angegebenen Art zu schaffen, der zum einen mittels Scheibenfeder eine axiale Fixierung der Kartusche der variablen Turbinengeometrie in Turbinenradnähe gewährleistet und zum anderen mittels Hitzeschild eine verbesserte Wärmedämmung in Richtung des Lagergehäuses ermöglicht.

Die Lösung dieser Aufgabe erfolgt durch die Merkmale des Anspruchs 1.

Die Scheibenanordnung des erfindungsgemäßen Turboladers ist aus zumindest zwei, gegebenenfalls jedoch mehreren Materiallagen ausgebildet und beinhaltet sowohl die Funktion der Vorspannkrafterzeugung als auch die Verbesserung der Abschirmfunktion durch Erhöhung des Wärmewiderstandes. Dadurch ist es möglich, die Funktion, insbesondere auch bei erhöhten Abgastemperaturen, sicherzustellen.

Zusätzlich kann u. U. vorteilhafterweise auf eine Flüssigkeitskühlung des Lagergehäuses verzichtet werden.

Durch das Vorsehen mehrerer Materiallagen wird es möglich, zur weiteren Verbesserung der Vorspannkraft- und/oder der Wärmedämmeigenschaften zwischen den Materiallagen einen Luftspalt vorzusehen.

Hierzu ist eine der Materiallagen mit einem Knick versehen, der zwei in einem vorzugsweise stumpfen Winkel zueinander angeordnete Bereiche schafft, während die andere Materiallage als Scheibe entsprechend einer Tellerfeder ausgebildet ist.

Die Unteransprüche haben vorteilhafte Weiterbildungen der Erfindung zum Inhalt.

Die Materiallagen bilden zwei separate Teile, vorzugsweise Formbleche, die im Bereich ihrer Außendurchmesser aufeinander aufliegen.

Ferner ist es grundsätzlich möglich, dass die Materiallagen aus demselben Material bestehen oder dass unterschiedliche Materialien gewählt werden.

Weitere Einzelheiten, Vorteile und Merkmale der vorliegenden Erfindung ergeben sich aus nachfolgender Beschreibung anhand der Zeichnung. Darin zeigt:
- Fig. 1: einen Teil eines erfindungsgemäßen Turboladers mit einer erfindungsgemäßen Scheibenanordnung, und
- Fig. 2: eine vergrößerte Darstellung der erfindungsgemäßen Scheibenanordnung.

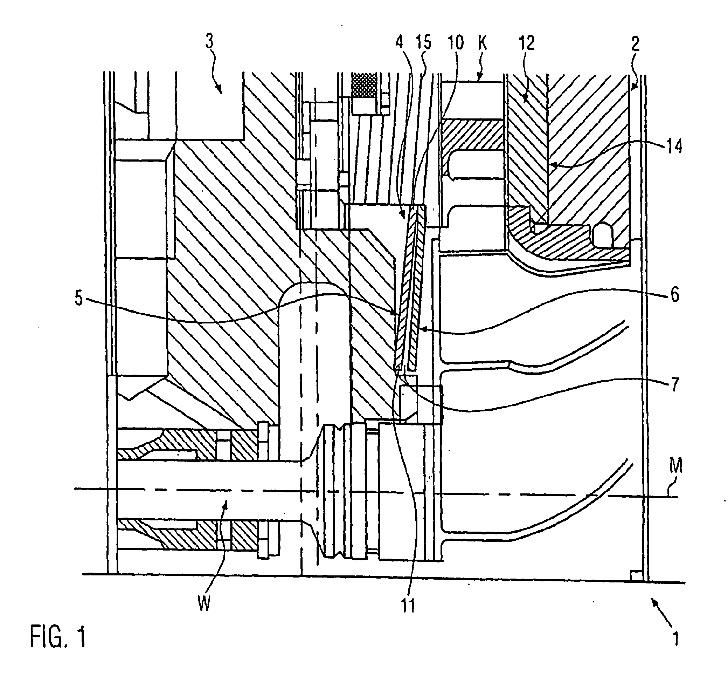

In Fig. 1 ist ein Teilbereich eines erfindungsgemäßen Turboladers 1 dargestellt, da diese Darstellung für die Erläuterung der erfindungsgemäßen Prinzipien ausreichend ist. Natürlich weist der Turbolader 1 sämtliche üblicherweise vorgesehenen Konstruktionselemente auf, die, wie gesagt, in Fig. 1 jedoch zur Vereinfachung der Darstellung weggelassen sind.

Somit ist in Fig. 1 ein Turbinengehäuse 2 einer Turbine dargestellt, das benachbart zu einem Lagergehäuse 3 angeordnet ist. Dieses Lagergehäuse 3 ist zwischen dem Turbinengehäuse 2 und einem Verdichtergehäuse (nicht dargestellt) eines ebenfalls nicht gezeichneten Verdichterrades angeordnet. Das Lagergehäuse 3 weist die Lagerung für eine Welle auf, die in Fig. 1 durch die strichpunktierte Mittellinie M symbolisiert ist, da Fig. 1 nur den oberen Teilbereich des erfindungsgemäßen Turboladers 1 wiedergibt.

Die Welle W trägt die Turbine und das Verdichterrad und ist über eine geeignete Lageranordnung im Lagergehäuse 3 gelagert.

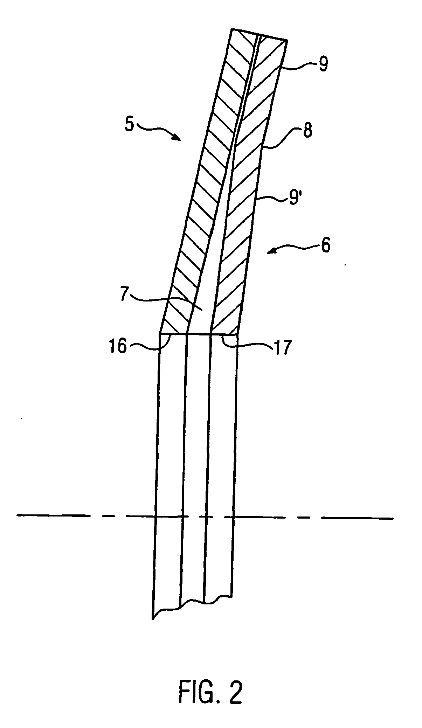

Zwischen dem Lagergehäuse 3 und einer Kartusche K, die von einer VTG Scheibe 12 mit axialem Anschlag 14 und einem Schaufellagerring 15 gebildet wird und die in dem Turbinengehäuse 2 axial verschieblich angeordnet ist, ist eine erfindungsgemäße Scheibenanordnung 4 eingespannt, die mehrlagig ausgebildet ist. Im Beispielsfalle sind hier zwei Materiallagen 5 und 6 vorgesehen, die nachfolgend anhand der Fig. 2 näher erläutert werden.

Fig. 1 verdeutlicht die Anordnung der Scheibenanordnung 4 zwischen dem Turbinengehäuse 2 und dem Lagergehäuse 3, wobei sich zwei Abstützbereiche 10, 11 ergeben, mit denen sich die Materiallage bzw. Scheibenfeder 5, wie im Einzelnen der Fig. 1 entnehmbar ist, an den entsprechenden Teilen des Schaufellagerrings der Kartusche der variablen Turbinengeometrie und des Lagergehäuses 3 abstützt.

Die Materiallage bzw. der innere Hitzeschild 6 wird am Außendurchmesser von der Scheibenfeder 5 zum Schaufellagerring 15 eingespannt.

In Fig. 2 ist eine Ausführungsform der erfindungsgemäßen Scheibenanordnung 4 dargestellt. Die beiden Materiallagen 5 und 6 sind bei dieser Ausführungsform zweiteilig ausgebildet. Fig. 2 verdeutlicht, dass die Materiallage bzw. Scheibenfeder 5, die die axiale Vorspannkraft aufbringt, eine konische Ausgestaltung aufweist. Ferner weist die Materiallage 5 eine Mittelausnehmung 16 auf, die koaxial zu einer Mittelausnehmung 17 der Materiallage 6, die als Hitzeschild für die Materiallage 5 dient, angeordnet ist, und einen gleich großen Durchmesser hat. Zwischen den Materiallagen 5 und 6 ist ein Luftspalt 7 vorgesehen, der die Wärmedämmeigenschaften weiter verbessert. Dieser Luftspalt 7 wird durch das Vorsehen eines Knicks 8 im Hitzeschild 6 erreicht, was diesen in zwei Bereiche 9, 9' aufteilt, die in einem vorzugsweise stumpfen Winkel zueinander angeordnet sind.

### Bezugszeichenliste

- 1: Turbolader/Abgasturbolader
- 2: Turbinengehäuse
- 3: Lagergehäuse
- 4: Scheibenanordnung
- 5, 6: Materiallagen (5: Scheibenfeder für Vorspannung; 6: Wärmeschutzlage für Lage 5 ohne Anlage/Berührung am Lagergehäuse)
- 7: Luftspalt am Innendurchmesser zwischen 5 und 6
- 8: Knick
- 9, 9': Bereiche des Hitzeschildes 6
- 10, 11: Anlagebereiche
- 12: VTG Scheibe
- 14: Axialer Anschlag
- 15: Schaufellagerring
- 16, 17: Mittelausnehmungen von 5 bzw. 6
- W: Welle
- K: Kartusche der variablen Turbinengeometrie
- M: Mittellinie

## Patentansprüche

1. Turbolader (1)
- mit einem Turbinengehäuse (2) eines Turbinenrades;
- mit einer im Turbinengehäuse (2) axial verschieblich angeordneten, eine VTG-Scheibe (12) und einen Schaufellagerring (15) umfassenden Kartusche (K) für eine variable Turbinengeometrie (VTG);
- mit einem Lagergehäuse (3), das zwischen dem Turbinengehäuse (2) und einem Verdichtergehäuse eines Verdichterrades angeordnet und in dem eine Lageranordnung für eine Welle (W) angeordnet ist, die das Turbinenrad und das Verdichterrad trägt; und
- mit einer Scheibenanordnung (4), die zwischen der Kartusche (K) und dem Lagergehäuse (3) angeordnet ist;
**dadurch gekennzeichnet,**
- **dass** die Scheibenanordnung (4) aus zumindest zwei Materiallagen (5, 6) aufgebaut ist,
- **dass** zwischen den Materiallagen (5, 6) ein Luftspalt (7) angeordnet ist,
- **dass** die eine eine Scheibenfeder bildende Materiallage (5) als konische Scheibe ausgebildet ist, und
- **dass** die andere einen Hitzeschild für die Scheibenfeder bildende Materiallage (6) mit einem Knick (8) versehen ist, wobei
- nur die konische Materiallage (5) an ihrem Innendurchmesser am Lagergehäuse (3) anliegt, und wobei
- die den Hitzeschild bildende Materiallage (6) im Bereich ihres Außendurchmessers durch die konische Materiallage (5) axial zum Schaufellagerring (15) verspannt wird.

2. Turbolader nach Anspruch 1, **dadurch gekennzeichnet, dass** die Materiallagen (5, 6) Mittelausnehmungen (16, 17) mit demselben Durchmesser aufweisen.

3. Turbolader nach Anspruch 1 oder 2, **dadurch gekennzeichnet, dass** die Materiallagen (5, 6) den gleichen Außendurchmesser aufweisen.

4. Turbolader nach einem der Ansprüche 1 bis 3, **dadurch gekennzeichnet, dass** die Materiallagen (5, 6) separate Teile sind.

5. Turbolader nach einem der Ansprüche 1 bis 4, **dadurch gekennzeichnet, dass** die Materiallagen (5, 6) aus demselben Material bestehen.

6. Turbolader nach einem der Ansprüche 1 bis 4, **dadurch gekennzeichnet, dass** die Materiallagen (5, 6) aus unterschiedlichen Materialien bestehen.

## Claims

1. Turbocharger (1)
- having a turbine housing (2) of a turbine wheel;
- having a cartridge (K) which is arranged in the turbine housing (2) in an axially displaceable manner, comprises a VTG disk (12) and a vane ring (15) and is intended for a variable turbine geometry (VTG);
- having a bearing housing (3) which is arranged between the turbine housing (2) and a compressor housing of a compressor wheel and in which a bearing arrangement for a shaft (W) carrying the turbine wheel and the compressor wheel is arranged; and
- having a disk arrangement (4) which is arranged between the cartridge (K) and the bearing housing (3) ;
**characterized in that**
- the disk arrangement (4) is composed of at least two material layers (5, 6),
- an air gap (7) is arranged between the material layers (5, 6),
- the one material layer (5) forming a disk spring is designed as a conical disk, and
- the other material layer (6) forming a heat shield for the disk spring is provided with a bend (8), wherein
- only the conical material layer (5) abuts at its inside diameter against the bearing housing (3), and wherein
- the material layer (6) forming the heat shield is axially restrained relative to the vane ring (15) in the region of its outside diameter by the conical material layer (5).

2. Turbocharger according to Claim 1, **characterized in that** the material layers (5, 6) have center apertures (16, 17) having the same diameter.

3. Turbocharger according to Claim 1 or 2, **characterized in that** the material layers (5, 6) have the same outside diameter.

4. Turbocharger according to one of Claims 1 to 3, **characterized in that** the material layers (5, 6) are separate parts.

5. Turbocharger according to one of Claims 1 to 4, **characterized in that** the material layers (5, 6) are made of the same material.

6. Turbocharger according to one of Claims 1 to 4, **characterized in that** the material layers (5, 6) are made of different materials.

## Revendications

1. Turbocompresseur (1)
- avec une enceinte de turbine (2) d'une roue de turbine;
- avec une cartouche (K) disposée de façon mobile axialement dans l'enceinte de turbine (2) et comportant un disque VTG (12) et une couronne de paliers d'aube (15) pour une géométrie de turbine variable (VTG);
- avec un logement de palier (3), qui est disposé entre l'enceinte de turbine (2) et une enceinte de compresseur d'une roue de compresseur et dans lequel est disposé un arrangement de palier pour un arbre (W), qui porte la roue de turbine et la roue de compresseur; et
- avec un arrangement de disques (4), qui est disposé entre la cartouche (K) et le logement de palier (3);
**caractérisé en ce que**
- l'arrangement de disques (4) est constitué d'au moins deux couches de matière (5, 6),
- une lame d'air (7) est disposée entre les couches de matière (5, 6),
- une première couche de matière (5) formant une rondelle élastique est réalisée sous forme d'une rondelle conique, et
- l'autre couche de matière (6) formant un écran thermique pour la rondelle élastique est munie d'un coude (8), dans lequel
- seule la couche de matière conique (5) s'applique par son diamètre intérieur sur le logement de palier (3), et dans lequel
- la couche de matière (6) formant l'écran thermique est serrée axialement par rapport à la couronne de paliers d'aube (15) par la couche de matière conique (5) dans la région de son diamètre extérieur.

2. Turbocompresseur selon la revendication 1, **caractérisé en ce que** les couches de matière (5, 6) présentent des évidements centraux (16, 17) présentant le même diamètre.

3. Turbocompresseur selon la revendication 1 ou 2, **caractérisé en ce que** les couches de matière (5, 6) présentent le même diamètre extérieur.

4. Turbocompresseur selon l'une quelconque des revendications 1 à 3, **caractérisé en ce que** les couches de matière (5, 6) sont des pièces séparées.

5. Turbocompresseur selon l'une quelconque des revendications 1 à 4, **caractérisé en ce que** les couches de matière (5, 6) sont constituées de la même matière.

6. Turbocompresseur selon l'une quelconque des revendications 1 à 4, **caractérisé en ce que** les couches de matière (5, 6) sont constituées de matières différentes.
